# EUROPÄISCHE PATENTSCHRIFT

(11) **EP 0 614 007 B1**
(45) Veröffentlichungstag und Bekanntmachung des Hinweises auf die Patenterteilung: **08.10.1997**
(21) Anmeldenummer: 94102469.7
(22) Anmeldetag: 18.02.1994
(51) Int. Cl.: F03B 3/14

(54) **Hydraulische Verstelleinrichtung**
Hydraulic adjusting system
Dispositif de réglage hydraulique

(30) Priorität: 27.02.1993 DE 4306140
(43) Veröffentlichungstag der Anmeldung: 07.09.1994
(73) Patentinhaber: KSB Aktiengesellschaft, 67227 Frankenthal (DE)
(72) Erfinder: Schaaf,Günter, D-28277 Bremen (DE); Schäfer, Horst, D-27404 Rhade (DE)

(56) Entgegenhaltungen:
- EP-A- 0 174 286
- CH-A- 345 622
- DE-C- 694 029
- DE-C- 972 992
- US-A- 4 253 808
- US-A- 4 419 252
- US-A- 5 038 563
- TRANSACTIONS OF THE AMERICAN NUCLEAR SOCIETY. 1984 WINTER MEETING Bd. 47 , November 1984 , WASHINGTON.USA. Seiten 465 - 466 R.T.JACOBS 'Grafoil-sealed,water operated hydraulic ram for extremely high radiation.'

## Beschreibung

Die Erfindung betrifft eine Verstelleinrichtung hydraulischer Art für Verstellpropeller von Strömungsmaschinen, wobei in einer den Verstellpropeller antreibenden Welle Übertragungselemente zur Zu- und Ableitung sowie zur Führung einer Hydraulikflüssigkeit angeordnet sind.

Aus der DE-PS 694 029 ist eine derartige Lösung bekannt und am Beispiel eines Schiffsschraubenantriebes beschrieben. Die hier Anwendung findende Hydraulikflüssigkeit, gewöhnlich ein Öl, wird im Schiffsinnern der Welle zugeführt. Die Abdichtung im Bereich der Drehdurchführung ist jedoch immer ein besonderer Risikopunkt. Eventuelle Leckagen in diesem Bereich können erhebliche Konsequenzen, gerade beim Einsatz für Turbinen oder Pumpen, nach sich ziehen. Eine Undichtigkeit der Drehdurchführung würde ein unzulässiges Vermischen der Hydraulikflüssigkeit mit dem Fördermedium bewirken. Um dies zu verhindern, sind derartige Einspeisevorrichtungen gewöhnlich in besonders abzudichtenden Räumen angeordnet.

Eine andere Lösung gemäß der EP-PS 0 174 286 sieht hierzu vor, daß den Strömungsraum des Fördermediums kreuzende Bauteile einer Nabenverkleidung die Hydraulikflüssigkeit dem Verstellpropeller zuführen. Innerhalb der Nabenverkleidung erfolgt dann die Übertragung vom stillstehenden auf den rotierenden Teil. Diese Lösung ist aber sehr störanfällig bei Fördermedien, die mit faserigen oder körnigen Bestandteilen verunreinigt ist. Dadurch kann der Zustrom zum oder vom Laufrad behindert werden, und ein Ausfall des Aggregates wird sehr wahrscheinlich.

Der Erfindung liegt die Aufgabe zugrunde, für hydraulisch betätigbare Verstellpropeller eine Übertragung zwischen stillstehendem und rotierendem Bauteil zu entwickeln, welche bei wenig aufwendiger Bauweise eine Funktion auch bei Undichtigkeiten gewährleistet. Die Lösung dieser Aufgabe erfolgt gemäß dem kennzeichnenden Teil des Anspruches 1. Durch die Anordnung der Drehdurchführung in einem an den Verstellpropeller anschließenden und mit dem Fördermedium in Verbindung stehenden Raum sowie die Verwendung einer Hydraulikflüssigkeit, die keinerlei Gefährdung für das Fördermedium darstellt, kann in einfachster Weise eine problemlose hydraulische Verstelleinrichtung realisiert werden. Sollte der hypothetische Fall einer Undichtigkeit im Bereich der Drehdurchführung auftreten, so ist trotzdem ein problemloser weiterer Betrieb der Anlage möglich. Eventuell austretende Hydraulikflüssigkeit hätte keine negativen Auswirkungen auf das zu fördernde Medium. Für Notfälle ist es auch ohne weiteres möglich, durch eine Druckerhöhung in der Zuführleitung des Hydrauliksystems den durch die Leckage bedingten Druckabfall zu überbrücken und somit den Weiterbetrieb der Strömungsmaschine bis zu einem Zeitpunkt zu gewährleisten, bei dem eine problemlose Reparatur möglich ist. Durch die Anordnung der Drehdurchführung innerhalb eines an den Verstellpropeller anschließenden und mit dem Fördermedium in Verbindung stehenden Raumes sind auch keine aufwendigen Eingriffe in das Innere der Strömungsmaschine notwendig. Gewöhnlich handelt es sich bei diesem Raum um einen neben dem Verstellpropeller liegenden Teil des Strömungsmaschinengehäuses, in dem die Welle mit ihrer Lagern angeordnet ist. Ohne große konstruktive Veränderungen des Verstellpropellers und des Gehäuses kann somit in dem Übergangsbereich zwischen Gehäuse und Verstellpropeller in einfachster Weise die Drehdurchführung für die Hydraulikflüssigkeit positioniert werden. Durch bloßes Entfernen des Verstellpropellers ist auch eine gute Zugänglichkeit gewährleistet.

Da derartige Verstelleinrichtungen häufig nur gelegentlich betrieben werden, kann von einer außerhalb der Strömungsmaschine befindlichen Quelle eine Druckbeaufschlagung erfolgen. Die hierfür nötigen Verbindungsleitungen zwischen der Drehdurchführung und der Quelle sind in einfachster Weise mittels üblicher Leitungssysteme erstellbar.

Ausgestaltungen der Erfindung sehen vor, daß die Hydraulikflüssigkeit in ihrer Zusammensetzung dem flüssigen Bestandteil des Fördermediums entspricht, bzw. daß als Hydraulikflüssigkeit Wasser Verwendung findet. Wird beispielsweise Abwasser und dgl. als Fördermedium verwendet, so wird als Hydraulikflüssigkeit normales Trinkwasser, Leitungswasser oder dgl. eingesetzt. Selbstverständlich sind hierbei die Bestandteile des Hydrauliksystems so ausgelegt, daß eine Systembeeinträchtigung durch eine korrosive Wirkung der Hydraulikflüssigkeit ausgeschlossen ist. Vorzugsweise findet diese erfindungsgemäße Lösung Verwendung in denjenigen Bereichen, die Wasser als Fördermedium benutzen.

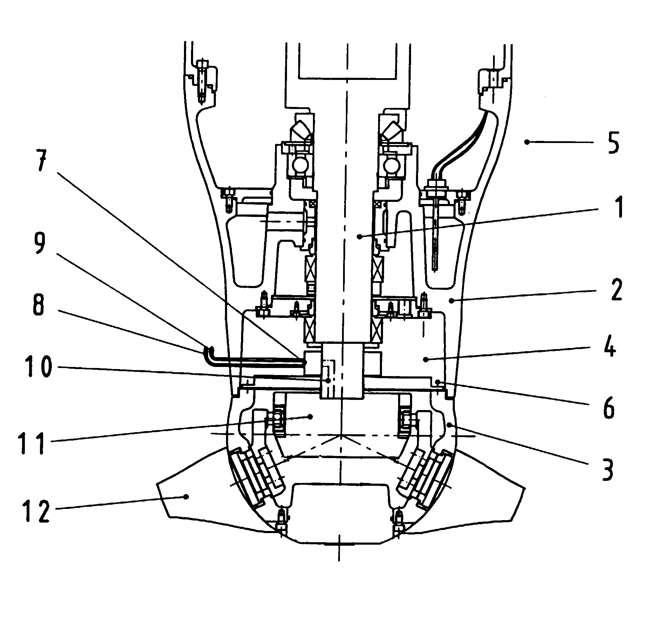

Ein Ausführungsbeispiel der Erfindung ist in der Zeichnung dargestellt und wird im folgenden näher beschrieben.

Auf einer Welle 1, die innerhalb eines Gehäuses 2 angeordnet ist, befindet sich ein Verstellpropeller 3. Zwischen dem Gehäuse 2 und dem Verstellpropeller 3 ist ein Raum 4, der mit dem Strömungsraum 5 in Verbindung steht und flüssigkeitsgefüllt ist. Zur Erlangung einer günstigen Strömungsführung für ein zu förderndes Medium deckt bei diesem Ausführungsbeispiel das Gehäuse 2 den Raum 4 ab, wobei der Verstellpropeller 3 mit seiner Stirnseite 6 ebenfalls in den Raum 4 eintaucht. Diese Maßnahme verhindert zudem, daß eventuell in dem Fördermedium befindliche Fest- oder Schwebstoffe einen ungehinderten Zugang zum Raum 4 haben. Der Übergangsbereich zwischen Verstellpropeller 3 und Gehäuse 2 hat somit eine gewisse Filterfunktion, indem er nur weitgehend schwebstofffreies Fördermedium in den Raum 4 einströmen läßt. An dem den Raum 4 durchdringenden Teil der Welle 1 ist eine Drehdurchführung 7 angeordnet, in die durch die Leitungen 8, 9 von einer externen - hier nicht gezeigten - Quelle Hydraulikflüssigkeit eingespeist wird. Bei der Förderung von Medien der verschiedensten Zusammensetzung kann dies eine das Fördermedium nicht gefährdende Hydraulikflüssigkeit sein. Aus Vereinfachungsgründen ist es Wasser, wenn das Fördermedium selbst überwiegend aus Wasser besteht. Die Welle 1 weist Übertragungselemente 10 auf, mit deren Hilfe von der Drehdurchführung 7 die Hydraulikflüssigkeit in das Innere des Verstellpropellers 3 geleitet wird. Dort können dann bekannte Verstellsysteme 11 eine Umsetzung der Druckunterschiede des Hydrauliksystems in eine Schaufelverstellung bewirken.

## Patentansprüche

1. Verstelleinrichtung hydraulischer Art für Verstellpropeller von Strömungsmaschinen, wobei in einer den Verstellpropeller (3) antreibenden Welle Übertragungselemente zur Zuund Ableitung sowie zur Führung einer Hydraulikflüssigkeit angeordnet sind, und die Hydraulikflüssigkeit durch separate Leitungen (8, 9) von einer externen Quelle über eine Drehdurchführung (7) in die Welle (1) der Strömungsmaschine zugeführt wird, **dadurch gekennzeichnet,** daß ein mit dem Fördermedium in Verbindung stehender Raum (4) an den Verstellpropeller (3) angrenzt und die Welle (1) aufnimmt und daß in diesem Raum (4) die Drehdurchführung (7) für die Hydraulikflüssigkeit angebracht ist.

2. Verwendung der Verstelleinrichtung nach Anspruch 1, dadurch gekennzeichnet, daß die verwendete Hydraulikflüssigkeit in ihrer Zusammensetzung dem flüssigen Bestandteil des Fördermediums entspricht.

3. Verwendung der Verstelleinrichtung nach Anspruch 2, wobei die Hydraulikflüssigkeit Wasser ist.

## Claims

1. Hydraulic adjusting device for controllable pitch propellers of fluid-flow machines, transmission elements for feeding and discharging and also for conducting a hydraulic fluid being arranged in a shaft driving the controllable pitch propeller (3), and the hydraulic fluid being fed through separate lines (8, 9) from an external source via a rotary transmission leadthrough (7) into the shaft (1) of the fluid-flow machine, characterized in that a space (4) connected to the delivery medium adjoins the controllable pitch propeller (3) and accommodates the shaft (1), and in that the rotary transmission leadthrough (7) for the hydraulic fluid is attached in this space (4).

2. Use of the adjusting device according to Claim 1, characterized in that the hydraulic fluid used corresponds in its composition to the liquid constituent of the delivery medium.

3. Use of the adjusting device according to Claim 2, the hydraulic fluid being water.

## Revendications

1. Dispositif de réglage de type hydraulique pour des hélices à pas variable de turbomachines, dans lequel des éléments de transmission pour l'admission et l'évacuation ainsi que pour le guidage d'un liquide hydraulique sont disposés dans un arbre entraînant l'hélice à pas variable (3), et le liquide hydraulique est amené par des canalisations séparées (8, 9) à partir d'une source extérieure par un passage tournant (7) dans l'arbre (1) de la turbomachine, caractérisé en ce qu'une chambre (4) se trouvant en communication avec le fluide de transport est jointive à l'hélice à pas variable (3) et contient l'arbre (1) et en ce que le passage tournant (7) pour le liquide hydraulique est ménagé dans cette chambre (4).

2. Utilisation du dispositif de réglage suivant la revendication 1, caractérisée en ce que le liquide hydraulique utilisé correspond, au point de vue de sa composition, au composant liquide du fluide de transport.

3. Utilisation du dispositif de réglage suivant la revendication 2, dans laquelle le liquide hydraulique est l'eau.
